(19) 

**Europäisches Patentamt**
**European Patent Office**
**Office européen des brevets**

(11) **EP 4 734 039 A1**

(12) **EUROPEAN PATENT APPLICATION**

(43) Date of publication:
**29.04.2026 Bulletin 2026/18**

(21) Application number: **24208562.9**

(22) Date of filing: **24.10.2024**

(51) International Patent Classification (IPC):
**G06T 1/00** *(2006.01)* **G06T 5/80** *(2024.01)*

(52) Cooperative Patent Classification (CPC):
**G06T 5/80; G06T 1/0064;** G06T 2201/0051;
G06T 2201/0065

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Huawei Technologies Co., Ltd.**
**Shenzhen, Guangdong 518129 (CN)**

(72) Inventor: **Gelardi, Gabriele**
**80992 Munich (DE)**

(74) Representative: **Roth, Sebastian**
**Mitscherlich PartmbB**
**Karlstraße 7**
**80333 München (DE)**

Remarks:
Amended claims in accordance with Rule 137(2) EPC.

(54) **METHOD, APPARATUS AND MACHINE READABLE STORAGE MEDIUM FOR CORRECTING PERSPECTIVE DISTORTION**

(57) In some examples, a method is provided for correcting perspective distortion of a suspect image with respect to a reference pattern, wherein the reference pattern defines a reference constellation comprising a first set of points, wherein the first set of points represent a measure of correlation calculated from a normalised cross-correlation between a source digital watermark and a unit pattern, wherein the unit pattern defines a steganographic primitive of the source digital watermark.

Figure 1

**Description**

TECHNICAL FIELD

The present disclosure relates, in general, to a method, an apparatus and a machine readable storage medium for correcting perspective distortion of a suspect image with respect to a reference pattern.

BACKGROUND

In signal processing applications, accurately and efficiently computing the affine transformation between a suspect signal, such as an image, and a reference signal, such as a reference pattern, is crucial for tasks like signal detection and recognition, especially in image processing. When the reference pattern is distorted by transformations like magnification, rotation, perspective transformation, detecting or recognizing it in a suspect signal becomes more challenging. Failure to determine and compensate for these transformations makes matching the reference pattern with its counterpart in the suspect image more difficult.

Several techniques have been developed in order to deal with the effects of transformations in the detection of a reference pattern. For example, the Fourier-Mellin Transform is a powerful technique in image processing and pattern recognition because of its ability to achieve invariance to scale, rotation, and translation. This means that it can recognize objects in images even when they appear at different sizes, orientations, or positions, making it particularly useful for tasks like object recognition, image registration, and feature extraction.

However, its effectiveness is limited to these specific transformations. When images undergo more complex geometric transformations, such as perspective distortions or affine transformations, the Fourier-Mellin Transform struggles to maintain its invariance. Perspective transformations involve changes in an image due to the viewpoint, where the shape of objects might be distorted in a way that cannot be easily compensated for by simple scaling, rotation, or translation adjustments.

Reference patterns can be used as digital watermarks in order to enable verification of the authenticity or integrity of a carrier signal or to show the identity of its owners. Such digital watermarks can be embedded into signals such as audio, video or image data. In image watermarking for example, especially in techniques based on spatial composition of a message, it is essential to preserve the original perspective view, as any alterations would desynchronize the message reading. In fact, attackers typically try to apply these sorts of geometrical transformation in order to desynchronize watermarked message reading, thereby making it very difficult to determine that an image has been copied or recorded. For example, in the case of camcording attacks, in which an unauthorized copy image or video is captured using an image capture device, perspective transformations are naturally present as a result of the position and orientation of the image capture device relative to the source material being copied (e.g., a screen). Accordingly, it is important to be able to provide watermarking techniques capable of re-synchronizing message reading even in these sort of scenarios.

SUMMARY

An objective of the present disclosure is to provide a method for correcting perspective distortion of a suspect image with respect to a reference pattern. In an example, the original perspective view of the suspect image can be restored in order to successfully extract the reference pattern.

The foregoing and other objectives are achieved by the features of the independent claims.

Further implementation forms are apparent from the dependent claims, the description and the Figures.

A first aspect of the present disclosure provides a method for correcting perspective distortion of a suspect image with respect to a reference pattern, wherein the reference pattern defines a reference constellation comprising a first set of points, wherein the first set of points represent a measure of correlation calculated from a normalised cross-correlation between a source digital watermark and a unit pattern, wherein the unit pattern defines a steganographic primitive of the source digital watermark, the method comprising generating an extracted constellation, wherein the extracted constellation comprises a second set of points representing a normalised measure of correlation calculated from a cross-correlation between the unit pattern and the suspect image, wherein suspect image comprises a version of the source digital watermark degraded by one or more perspective transformations, generating a perspective-transformed constellation by perspective transforming the reference constellation on the basis of a set of parameters selected from a range for scale and rotation of a geometric transformation used for cross correlation between the extracted constellation and the reference pattern, wherein the range for scale and rotation is generated on the basis of the first set of points of the reference pattern, calculating a cross-correlation between the perspective-transformed constellation and the extracted constellation, wherein the cross-correlation between the perspective-transformed constellation and the extracted constellation comprises a measure of geometric distortion between the extracted constellation and the perspective transformed reference pattern, and determining a final set of parameters selected from the range based on the measure of geometric distortion, and computing a geometric transformation to correct perspective distortion of the suspect image.

Accordingly, resynchronization of a recorded image can be achieved using a minimum and convergence to the correct alignment can be achieved more quickly due to a smoother loss function. That is, application of stochastic gradient descent enables a more accurate and faster convergence to the correct alignment.

By dynamically adjusting the reference constellation there is an improved chance to obtain a broad alignment at an early stage and to then improve alignment accuracy during final stages, increasing successful extraction rate. Thanks to the simulation of the pinhole camera model, it is possible to confine the search for the correct alignment to a predefined range, filtering out unrealistic alignments, lowering the asymptotic complexity, and speeding up the process.

In an implementation of the first aspect, the method can further comprise generating a set of candidate parameters representing an initial projection of the suspect image onto an image plane, wherein the candidate parameters comprise a set of coordinates defining a mapping for the suspect image onto the image plane, and using the candidate parameters of the initial projection of the suspect image to determine the range for scale and rotation of a geometric transformation used for cross correlation between the extracted constellation and the perspective-transformed constellation.

The fine method used to extract the alignment feedback provides a stronger and more precise signal if compared to the traditional prior art approaches. This makes it possible to realign with just one single frame/-image.

In an example, the method can further comprise defining an initial search space relating to a set of parameters for scale and rotation of a geometric transformation used for cross correlation between the extracted constellation and the perspective-transformed constellation on the basis of the set of candidate parameters representing the initial projection of the suspect image onto the image plan. The method can further comprise minimising a loss function relating to the measure of geometric distortion between the perspective transformed extracted constellation and the perspective-transformed constellation by calculating a gradient value, and, on the basis of the gradient value, modifying a set of parameters for scale and rotation of a geometric transformation used for cross correlation between the extracted constellation and the perspective-transformed constellation. The loss function can comprise the measure of geometric distortion between the perspective transformed extracted constellation and the perspective-transformed constellation. The measure of geometric distortion can comprise a measure of intensity representing a degree of alignment between the perspective transformed extracted constellation and the perspective-transformed constellation. The modification can be performed using stochastic gradient descent.

A second aspect of the present disclosure provides an apparatus comprising at least one processor, and at least one memory including computer program code for correcting perspective distortion of a suspect image with respect to a reference pattern, wherein the reference pattern defines a reference constellation comprising a first set of points, wherein the first set of points represent a measure of correlation calculated from a normalised cross-correlation between a source digital watermark and a unit pattern, wherein the unit pattern defines a steganographic primitive of the source digital watermark, the at least one memory and computer program code being configured to, with the at least one processor, cause the apparatus to generate an extracted constellation, wherein the extracted constellation comprises a second set of points representing a normalised measure of correlation calculated from a cross-correlation between the unit pattern and the suspect image, wherein suspect image comprises a version of the source digital watermark degraded by one or more perspective transformations, generate a perspective-transformed constellation by perspective transforming the reference constellation on the basis of a set of parameters selected from a range for scale and rotation of a geometric transformation used for cross correlation between the extracted constellation and the reference pattern, wherein the range for scale and rotation is generated on the basis of the first set of points of the reference pattern, calculate a cross-correlation between the perspective-transformed constellation and the extracted constellation, wherein the cross-correlation between the perspective-transformed constellation and the extracted constellation comprises a measure of geometric distortion between the extracted constellation and the perspective transformed reference pattern, determine a final set of parameters selected from the range based on the measure of geometric distortion, and compute a geometric transformation to correct perspective distortion of the suspect image.

In an implementation of the second aspect, the at least one memory and computer program code can be configured to, with the at least one processor, further cause the apparatus to generate a set of candidate parameters representing an initial projection of the suspect image onto an image plane, wherein the candidate parameters comprise a set of coordinates defining a mapping for the suspect image onto the image plane, and using the candidate parameters of the initial projection of the suspect image, determine the range for scale and rotation of a geometric transformation used for cross correlation between the extracted constellation and the perspective-transformed constellation. The at least one memory and computer program code can be configured to, with the at least one processor, further cause the apparatus to define an initial search space relating to a set of parameters for scale and rotation of a geometric transformation used for cross correlation between the extracted constellation and the perspective-transformed constellation on the basis of the set of candidate parameters representing the initial projection of the suspect image onto the image plan. The at least one memory and computer program code can be configured to, with the at least one processor, further cause the apparatus to minimise a loss function relating to the measure of geometric distortion between the perspective transformed extracted constellation and the perspective-transformed constellation by calculating a gradient value, and on the basis of the gradient value, modify a set of parameters for scale and rotation of a geometric transformation used for cross correlation between the extracted constellation and the perspective-transformed constellation. The loss function can comprise the measure of geometric distortion between the perspective transformed extracted constellation and the perspective-transformed constellation. The measure of geometric distortion can comprise a measure of intensity representing a degree of alignment between the perspective transformed extracted constellation and the perspective-transformed constellation. The at least one memory and computer program code can be configured to, with the at least one processor, further cause the apparatus to perform the modification using stochastic gradient descent.

A third aspect of the present disclosure provides a machine-readable storage medium encoded with instructions for correcting perspective distortion of a suspect image with respect to a reference pattern, wherein the reference pattern defines a reference constellation comprising a first set of points, wherein the first set of points represent a measure of correlation calculated from a normalised cross-correlation between a source digital watermark and a unit pattern, wherein the unit pattern defines a steganographic primitive of the source digital watermark, the instructions executable by a processor, whereby to cause the processor to generate an extracted constellation, wherein the extracted constellation comprises a second set of points representing a normalised measure of correlation calculated from a cross-correlation between the unit pattern and the suspect image, wherein suspect image comprises a version of the source digital watermark degraded by one or more perspective transformations, generate a perspective-transformed constellation by perspective transforming the reference constellation on the basis of a set of parameters selected from a range for scale and rotation of a geometric transformation used for cross correlation between the extracted constellation and the reference pattern, wherein the range for scale and rotation is generated on the basis of the first set of points of the reference pattern, calculate a cross-correlation between the perspective-transformed constellation and the extracted constellation, wherein the cross-correlation between the perspective-transformed constellation and the extracted constellation comprises a measure of geometric distortion between the extracted constellation and the perspective transformed reference pattern, determine a final set of parameters selected from the range based on the measure of geometric distortion, and compute a geometric transformation to correct perspective distortion of the suspect image.

These and other aspects of the invention will be apparent from the embodiment(s) described below.

BRIEF DESCRIPTION OF THE DRAWINGS

In order that the present disclosure may be more readily understood, embodiments will now be described, by way of example, with reference to the accompanying drawings, in which:

Figure 1 is a schematic representation of an application scenario according to an example;

Figure 2 is a schematic representation of a source digital watermark, and a normalized cross correlation with a unit pattern, according to an example;

Figure 3 is a schematic representation of a pinhole camera model;

Figure 4a is a schematic representation of a reference constellation according to an example, in which the points of the reference constellation have been stretched or rotated along different perspective parameters;

Figures 4b-d are schematic representations of a reference constellation according to an example, in which the points of the reference constellation have been scaled;

Figure 5 is a graph depicting a measure of feedback obtained with a reference constellation and a modified reference constellation over the distance parameter;

Figure 6 is a schematic representation of a cross-correlation process according to an example;

Figure 7 is a flow chart of a method, according to an example; and

Figure 8 is a schematic representation of a machine according to an example.

DETAILED DESCRIPTION

Example embodiments are described below in sufficient detail to enable those of ordinary skill in the art to embody and implement the systems and processes herein described. It is important to understand that embodiments can be provided in many alternate forms and should not be construed as limited to the examples set forth herein.

Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof. The term "and/or" is only an association relationship for describing associated objects and represents that three relationships may exist such that A and/or B may indicate that A exists alone, A and B exist at the same time, or B exists alone. The character "/" generally represents that the associated objects are in an "or" relationship.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

The following contains specific information related to implementations of the present disclosure. The drawings and their accompanying detailed disclosure are merely directed to implementations. However, the present disclosure is not limited to these implementations. Other variations and implementations of the present disclosure will be obvious to those skilled in the art.

The phrases "in one implementation," or "in some implementations," may each refer to one or more of the same or different implementations. The term "coupled" is defined as connected whether directly or indirectly through intervening components and is not necessarily limited to physical connections. The expression "at least one of A, B and C" or "at least one of the following: A, B and C" means "only A, or only B, or only C, or any combination of A, B and C."

The terms "system" and "network" may be used interchangeably.

For the purposes of explanation and non-limitation, specific details such as functional entities, techniques, protocols, and standards are set forth for providing an understanding of the present disclosure. In other examples, detailed disclosure of well-known methods, technologies, systems, and architectures are omitted so as not to obscure the present disclosure with unnecessary details.

Persons skilled in the art will immediately recognize that any network function(s) or algorithm(s) disclosed may be implemented by hardware, software or a combination of software and hardware. Disclosed functions may correspond to modules which may be software, hardware, firmware, or any combination thereof.

A software implementation may include machine- and/or computer- readable and/or executable instructions stored on a machine- and/or computer-readable medium such as memory or other types of storage devices. One or more microprocessors or general-purpose computers with communication processing capability may be programmed with corresponding executable instructions and perform the disclosed network function(s) or algorithm(s).

The microprocessors or general-purpose computers may include Applications Specific Integrated Circuitry (ASIC), programmable logic arrays, and/or using one or more Digital Signal Processor (DSPs). Although some of the disclosed implementations are oriented to software installed and executing on computer hardware, alternative implementations implemented as firmware or as hardware or as a combination of hardware and software are well within the scope of the present disclosure. The computer readable medium includes but is not limited to Random Access Memory (RAM), Read Only Memory (ROM), Erasable Programmable Read-Only Memory (EPROM), Electrically Erasable Programmable Read-Only Memory (EEPROM), flash memory, Compact Disc Read-Only Memory (CD-ROM), magnetic cassettes, magnetic tape, magnetic disk storage, or any other equivalent medium capable of storing computer-readable instructions.

There are a wide variety of signal processing applications in which the affine transformation between a suspect signal and a reference signal need to be computed accurately and efficiently. This is particularly the case for signal detection and recognition applications for images, and it applies to other types of signals as well. In the case of signal detection and signal recognition, an objective is to determine whether a particular reference signal, such as a digital watermark for example, which can be in the form of a reference pattern, is present in a suspect signal, such as an image (which may comprise an image frame of a video for example). This objective is more difficult when the reference signal is present but has been distorted by a transform of the coordinate space. In image processing, such transformations can be caused by manipulation of the reference signal through image editing (magnification, shrinking, rotation, digital sampling (and re-sampling), format conversions, etc.). Also, when the reference images or the objects they represent are captured via a camera from a different reference point relative to their original state the result is a suspect image comprising the reference signal in a transformed or distorted state.

According to an example, there is provided a method to determine and compensate for transformation of a reference signal, in order to, e.g., detect, recognise or match the reference signal in a suspect image. For example, camcording, which refers to the act of illegally recording a movie or television show for example, using a video camera or other recording device, can introduce perspective transform (distortions) in a reference signal, making it difficult to then match the distorted reference signal with a source reference signal in order to determine the source of the recording. For example, when a user captures an image or video with a camera (of, e.g., a mobile device) the plane of the camera is often tilted relative to that of the surface used to display the image or video.

Several techniques have been developed in order to try to compensate for distortions in recorded images, such as the Fourier-Mellin transformation for example, can achieve invariance to scale, rotation, and translation. This means that it can recognize objects in images even when they appear at different sizes, orientations, or positions, making it particularly useful for tasks like object recognition, image registration, and feature extraction. However, its effectiveness is limited to these specific transformations. When images undergo more complex geometric transformations, such as perspective distortions or affine transformations, the Fourier-Mellin Transform struggles to maintain its invariance. In practice, this means that the transform cannot be used to read a watermarked message unless the original view of the image is restored, which cannot be easily compensated for by simple scaling, rotation, or translation adjustments.

In an example, an imperceptible reference signal such as a reference pattern can be inserted into or otherwise provided as part of an image (or images) in order to enable reversing of perspective transformations within a certain range. In the domain of image (or video) watermarking this is important so as to be able to correctly read the embedded reference signal and therefore determine its origin and so on.

According to an example, correcting perspective distortion of a suspect image with respect to a reference pattern can be achieved by simulation of the perspective transform using the pinhole camera model. This model is generally better adapted to the problem, as the perspective transform is modelled as a function of x, y, z angles of a pinhole camera, distance and position. That is, this model is closer to the problem that the solution is attempting to solve as the original parameters of the recording camera are required in order to be able to reverse the transformations that result in the distorted reference pattern.

This means that the parameters are more interpretable and that it is possible to apply reasonable constraints in order to reduce the searching range. For example, limits can be imposed on the distance and angular orientation of the shooting camera. Furthermore, stochastic gradient descent can be used to optimize the parameters to ensure a faster convergency. The feedback used can be generated using the cross correlation between the known embedded signal, such as the reference pattern, and the distorted or perspective-transformed signal present in the suspect embedded image. In an example, in order to ensure a smooth loss function, and to be sure to get initial feedback even when the initial perspective view is quite far from the original, it is possible to perform a series of transformation to the known signal in order to achieve a partial invariance in each parameter of the pinhole camera model. By combining these aspects together iteratively, a solution is provided that, at each step, can take advantage of sophisticated optimizer algorithms developed for machine learning applications, and can change the parameters in the direction that minimize the loss function the most, thereby ensuring a fast convergency.

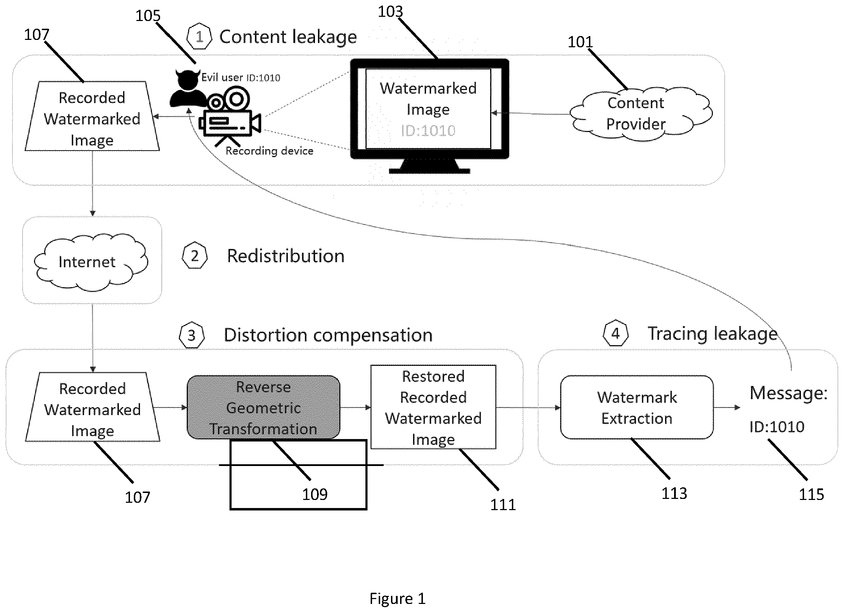

Figure 1 is a schematic representation of an application scenario according to an example. In the example of figure 1, a content provider 101 provides content for use or consumption, such as an image or video for example. The content may also include presentations, which may include media such as images and/or video and so on. The content in the example of figure 1 comprises an image 103. The image may be a picture, or a frame of video content for example. The image 103 is watermarked. According to an example, image 103 comprises a digital watermark. The digital watermark can comprise a predefined pattern composed from multiple unit patterns, where the unit pattern defines a steganographic primitive of the digital watermark. That is, a unit pattern can be arranged in multiple different positions to define a digital watermark, which can then be covertly embedded into an image or images according to any one of multiple known techniques.

Content leakage can occur as a result of a user using a recording device 105 to record the image 103, resulting in a recorded version 107 of the watermarked image 103. The recorded version 107 is distorted compared with the original 103 as a result of some perspective transformation that is introduced as a result of the position and orientation of the recording device relative to the image 103. That is, the camcording process naturally distorts the image 103 adding some perspective distortion.

The recorded version 107 can be distributed by the user, such as over the internet for example. In order to be able to extract the digital watermark from the recorded version 107, thereby enabling tracing of the user for example, any geometrical transformations present in the recorded version 107 must be reversed (109), as will be explained in more detail below. Once the original perspective view has been restored resulting in a restored version 111 of the image 103, the digital watermark can be correctly extracted (113) from the image and, for example, an ID (115) can be used to trace the leaker.

According to an example, the digital watermark comprises an imperceptible signal embedded into an image or images. The digital watermark comprises a 2D signal composed using a set of unit patterns disposed in a non-overlapping way. There can be a randomness to positioning of the unit patterns, although the positions are known so that the resulting digital watermark can be reproduced and/or compared to that extracted from a suspect image for example.

According to an example, a normalized cross correlation between a source digital watermark and the unit pattern produces a reference constellation comprising a first set of points. The first set of points represent a measure of correlation calculated as a result of the normalized cross-correlation between the source digital watermark and the unit pattern. That is, each point in the reference constellation represents a positive correlation with the unit pattern. In an example, normalization can be performed in the range [0, 1] in order to provide a clear representation of the results of the cross correlation.

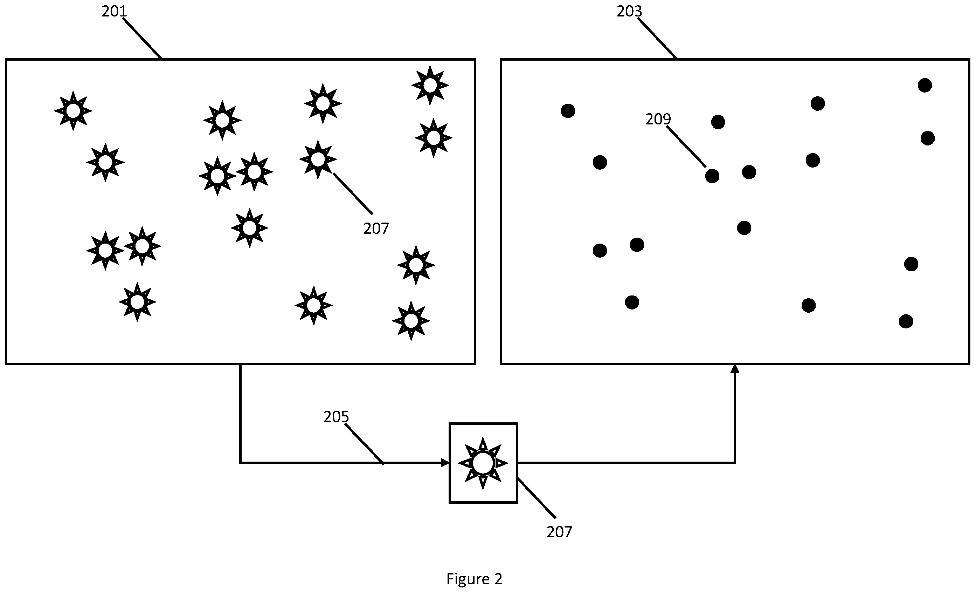

Figure 2 is a schematic representation of a source digital watermark, and a normalized cross correlation with a unit pattern, according to an example. A source digital watermark 201 is provided. The source digital watermark 201 comprises a set of unit patterns 207 arranged in a predefined composition. The source digital watermark 201 is cross correlated (205) with the unit pattern 207 to generate a reference constellation 203. The reference constellation 203 comprises a first set of points 209 representing a normalized measure of correlation between the source digital watermark 201 and the unit pattern 207. Accordingly, a point 209 in the reference constellation 203 signals a strong correlation, thereby indicating the position of a unit pattern from the source digital watermark 201. As the result is normalized, the set of points 209 are distinct and clear, and may be visually represented in any suitable manner (such as bright, or dark etc.).

In a similar manner to that described with reference to figure 2, a digital watermark extracted from a recorded image 107 can be cross correlated (again, normalized) with the unit pattern 207 in order to generate an extracted constellation. Such an extracted constellation will comprise a second set of points representing a normalised measure of correlation between the unit pattern and a representation of the source digital watermark that has been extracted from a suspect image, in this case the recorded image 107. That is, the representation of the source digital watermark extracted from the suspect image comprises a version of the source digital watermark degraded or otherwise altered by one or more perspective transformations.

In an example, the intensity of the maximum value from a cross correlation between the reference constellation and the extracted constellation provides an indication of how well the two constellations match each other. A high intensity value, for example, represents a good match and so a good alignment, whereas a low value represents poor alignment. The position of the maximum value with respect to a reference point can represent any translation transformation that the recorded image 107 may be affected by.

However, the maximum value of the correlation between the reference constellation and the extracted constellation is meaningful only when the degree of perspective transformation between the two constellations is within a small range. When the perspective transformation is substantial, the feedback from the correlation between the constellations will typically be irrelevant because it will be below a certain threshold and cannot be used as valid feedback. This is because, according to an example, the associated loss function contains a quite narrow area where the feedback suddenly improves, or in other words the two constellations match only when the perspective distortions are quite small.

According to an example, in order to expand the perspective range in which the cross correlation between the constellations provides useful feedback the reference constellation can be modified to increase this range. By effectively stretching the reference constellation along different perspective parameters (such as rotations and distance for example) the range in which constellation cross correlation feedback is meaningful is increased.

With reference to the pinhole camera model, which describes the coordinates of a point in three-dimensional space and its projection onto the image plane of an ideal pinhole camera, where the camera aperture is described as a point and no lenses are used to focus light, a constellation can be constructed that is the result of seeing the same constellation at different distances or scales.

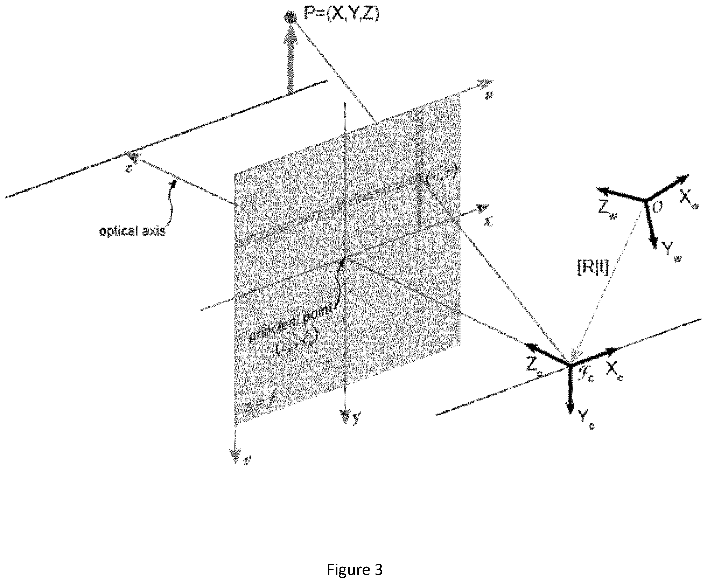

Figure 3 is a schematic representation of a pinhole camera model. With reference to figure 3, the pinhole camera model describes a camera that projects scene 3D points into the image plane by means of a perspective transformation described by:

$$s\mathbf{p} = \mathbf{K}[\mathbf{R} \mid \mathbf{t}]\mathbf{P}$$

or:

$$s\begin{bmatrix} u \\ v \\ 1 \end{bmatrix} = \begin{bmatrix} f_x & 0 & c_x \\ 0 & f_y & c_y \\ 0 & 0 & 1 \end{bmatrix} \begin{bmatrix} r_{11} & r_{12} & r_{13} & t_1 \\ r_{21} & r_{22} & r_{23} & t_2 \\ r_{31} & r_{32} & r_{33} & t_3 \end{bmatrix} \begin{bmatrix} X \\ Y \\ Z \\ 1 \end{bmatrix}$$

where:

- (X,Y,Z) are the coordinates of a 3D point in world space.
- (**u,v**) are the coordinates (in pixels) of the projection of (X,Y,Z) on the image plane.
- **K** is a 3x3 matrix of intrinsic camera parameters.
- [**R|t**] is a 3x4 matrix of extrinsic camera parameters, mapping world space to camera space. It is composed of a 3D rotation followed by translation.
- (**cx,cy**) is the camera's principal point in pixels, where its origin is projected on the image plane.

Usually is at the image center.

- **fx,fy** are the camera's horizontal and vertical focal lengths, respectively, expressed in pixel units.
- **s** is a scale factor.

According to an example, using the pinhole camera model as defined above with reference to figure 3, only the x, y, z angles and the distance from the screen (i.e., the distance from the recording device 103 in figure 1 to the watermarked image 103, which may be displayed on a screen or other medium for example) need to be used. Furthermore, constraints on maximum angles and distances can be placed, reducing the searching area.

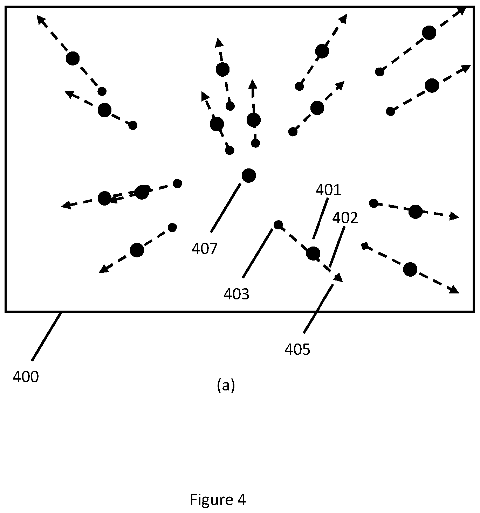

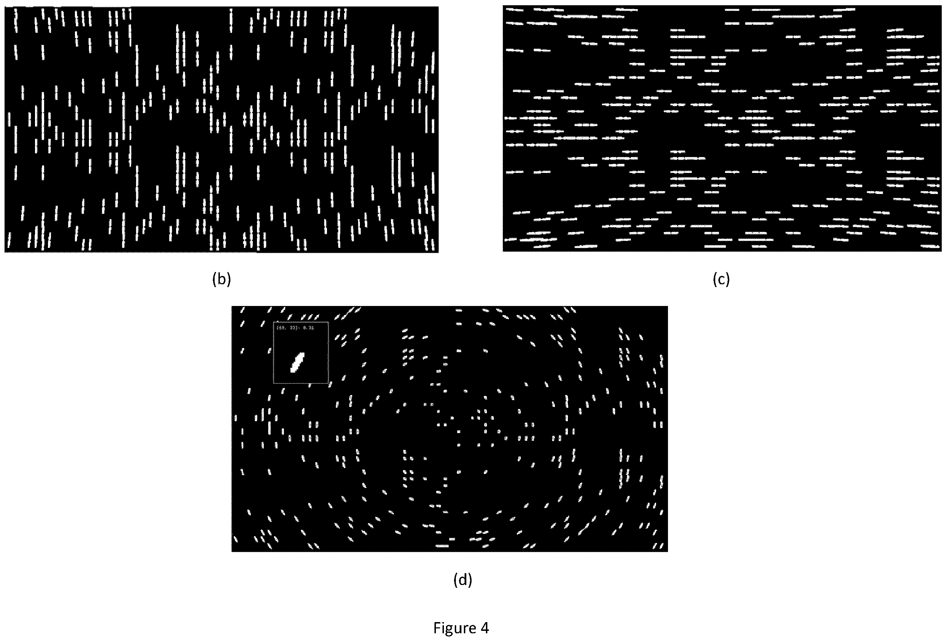

Figure 4 is a schematic representation of a reference constellation according to an example, in which the points of the reference constellation have been stretched or rotated along different perspective parameters. With reference to figure 4a, the set of points 209 for the reference constellation of figure 2 are depicted. For each point, there is shown an arrow 402 with a circular starting point 403 and an arrowhead ending point 405. In the example of figure 4, the arrows 402 can be visualized as extending out of the plane of the page of figure 4 in direction from point 403 to point 405. The arrows 402 may therefore be thought of as extensions of the points 401 that represent both a rotational component (that is represented by the orientation of an arrow) and a scale component (that is represented by the length of an arrow - note that arrows increase in length outwards from point 407). These extensions enable a greater degree of perspective transformation to be considered when matching the constellations, whilst providing constraints that.

Figures 4b-d are schematic representations of a reference constellation according to an example, in which the points of the reference constellation have been scaled. Figure 4b shows an example in which there is an x angle constellation adjustment. Figure 4c shows an example in which there is an y angle constellation adjustment. Figure 4d shows an example in which there is an z angle constellation adjustment

According to an example, it is therefore possible to select a set of parameters from the range for scale and rotation as described above with reference to figure 4 for a geometric transformation that can be used for cross correlation between an extracted constellation and the reference constellation 203. In an example, the range for scale and rotation is generated on the basis of the first set of points of the reference pattern, as described above. In an example, the set of parameters can be used to perspective transform the reference constellation. This perspective transformed constellation can be cross correlated with the extracted constellation in order to obtain a measure representing a degree of alignment between the constellations, and thus providing an indication of a perspective transform that may ultimately be used to recover the extracted constellation.

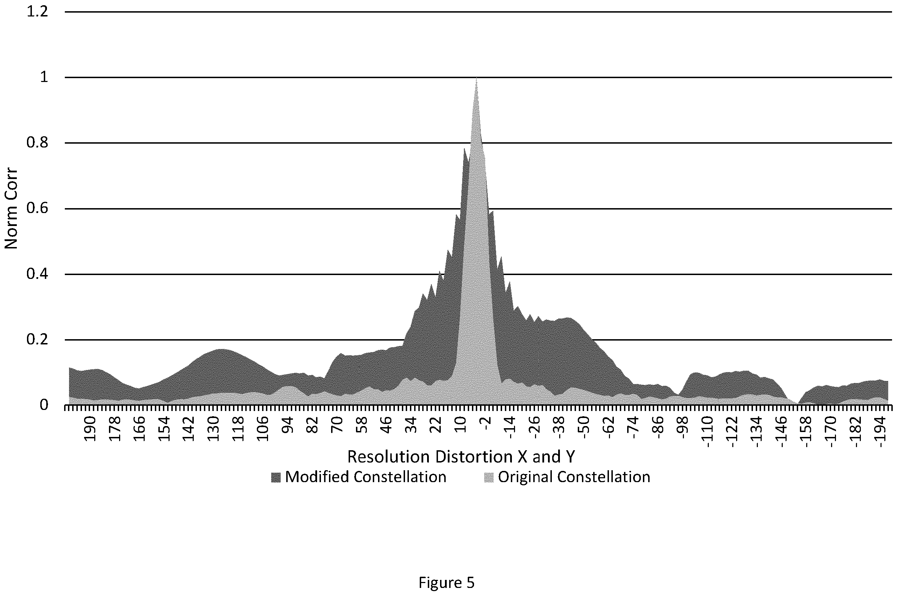

Figure 5 is a graph depicting a measure of feedback obtained with a reference constellation 203 (i.e., no extension of scale and rotation) and a modified reference constellation 400 over the distance parameter. On the x axis the distance parameter is reported and the y axis reports the normalized correlation at each distance. As can be seen, the modified constellation results (dark grey) benefits from a wider range in which it is possible to achieve meaningful feedback that can be used for alignment. In comparison, the unmodified reference constellation (light grey) only provides meaningful feedback in a quite narrow distance range. According to an example, the same concept of stretching the reference constellation to expand the feedback range is applied to rotations over x, y, z.

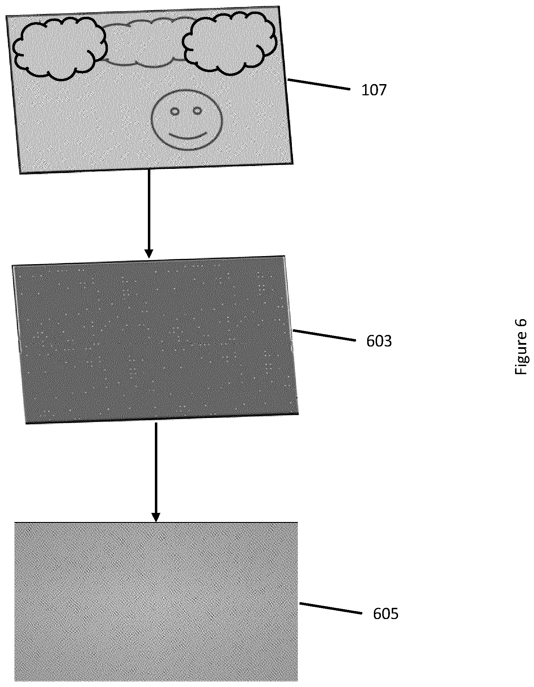

Figure 6 is a schematic representation of a cross-correlation process according to an example. In the example of figure 6, a recorded watermarked, i.e., suspect, image 107 is shown. The image 107 has been subject to perspective transformation as a result of the camcording process, which has resulted in distortion of the image and therefore also distortion of the digital watermark of the image.

Image 603 represents a normalized cross correlation between image 107 and unit pattern 207. That is, image 603 comprises an extracted constellation comprising a second set of points representing a normalised measure of correlation calculated from a cross-correlation between the unit pattern 207 and the suspect image 107. According to an example, the suspect image 107 comprises a version of the source digital watermark 201 degraded by one or more perspective transformations. As such, the extracted constellation of figure 6 is similarly perspective transformed, meaning that a comparison with the reference constellation does not yield any useful results due to their misalignment with one another.

By selecting a set of parameters from the range for scale and rotation as described above with reference to figure 4 for a geometric transformation, a perspective-transformed constellation can be generated by perspective transforming the reference constellation 203 using the set of parameters. A cross correlation can then be performed between the perspective-transformed reference constellation and the extracted constellation 603 to generate a measure representing a degree of alignment between the two. An image showing the results of such a cross correlation is shown in image 605. The cross-correlation between the perspective-transformed reference constellation and the extracted constellation comprises a measure 607 of geometric distortion between the perspective transformed reference constellation and the extracted constellation.

According to an example, the measure of geometric distortion between the perspective transformed reference constellation and the extracted constellation comprises an intensity value 607. According to an example, the intensity value can be generated using a template matching process in which the extracted constellation is artificial expanded (e.g., by padding with zero values around the edges). In an example, because given the points in the extracted constellation are randomly distributed, the probability of getting a similar constellation, such as the reference constellation, is very unlikely. Therefore, during a matching operation, the perspective transformed reference constellation can be slid around each possible position of the padded extracted constellation. During the sliding operation there will be only one point where the two constellation are actually overlapping, indicating the position of the intensity value that is used for calculating a loss.

For example, consider that, in the below, 'C' represents the extracted constellation, and 'P' indicates equal padding around C:

PPP

PCP

PPP

The padding maintains C at the centre of the padded image. Accordingly, when template matching is performed between the padded extracted constellation and the perspective transformed reference constellation, an image is returned with the bright spot (607) in the middle. In some circumstances, the alignment may not be centred in x and y. If the alignment is not centred, the extracted constellation will present some shift in x and y. This shift can be detected by the fact that the point with large intensity is no longer in the expected position (i.e., the centre of the returned image 605). However, in an example, since the expected position is in the centre, the alignment can be modified to centre the large intensity point resulting from the template matching process into the expected position.

According to an example, padding on the extracted constellation can be used to achieve invariance over the x and y position (as when the right angles in x-y-z are sought, there could still be misalignment over the coordinate position x and y). This misalignment can be rectified by simply moving the resultant intensity point to the expected position.

Recent advancements in machine learning have been possible also thanks to sophisticated algorithm like the optimizers. These algorithms use the gradient information in order to compute the next step that reduces a loss by the greatest degree.

The same algorithm can be used to gradually converge to the original perspective view, taking advantages of the fact that the loss function associated to our problem is now smoother thanks to the constellation stretching, thereby enabling recovery of the digital watermark from the distorted image 107.

In an example, the gradient can be calculated by using the finite difference method, instead of calculating the exact gradient, it can approximate by using finite differences. For a function f(x) the gradient at a point x can be approximated as:

$$\frac{\partial f}{\partial x} \approx \frac{f(x+h) - f(x)}{h}$$

where h is a small step size. This method is commonly used when the function is too complex to differentiate analytically.

In this context, according to an example, the constellations can be modified according to a set of current hyperparameters. After that, the gradient can be calculated and this information can be used to calculate the momentum, which provides a more stable direction. The momentum is finally used to update a set of weight parameters. One example of a hyperparameter is the intensity value 607 of the cross correlation between the extracted constellation and the perspective transformed reference constellation. When the value is above a certain threshold, it means that we are quite close to the final alignment, so we can reduce the modifications applied to the reference constellation. Furthermore, the number of iterations showing no significant improvements of the intensity value can be also taken into account. Calculation of gradient and momentum are standard practices in the art and will not be described in further detail.

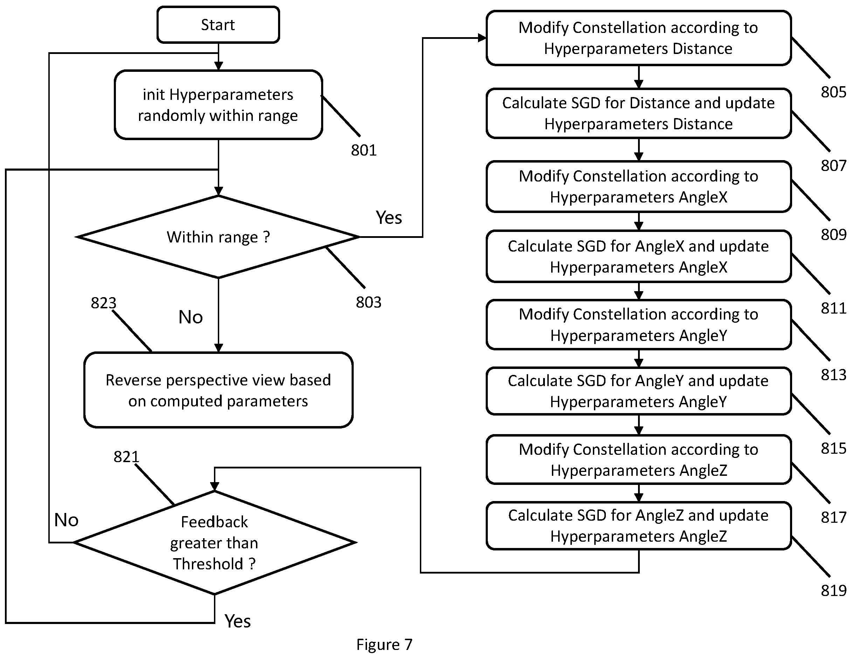

Figure 7 is a flow chart of a method, according to an example. In block 801, hyperparameters for a stochastic gradient descent model are initialized from the range determined as a result of the scaling of the points from the reference constellation, as described above. The initial set of parameter of block 801 are selected at random. Providing that the selected initial parameters are within range they are used, in blocks 805 - 819 to modify the reference constellation over the hyperparameters for scale (x, y, z) and rotation. Each hyperparameter modification triggers a stochastic gradient descent calculation resulting in a returned image as described above, in which an intensity is provided in a centre of the returned image. The intensity represents a feedback indicating a degree of alignment between the extracted constellation and the perspective transformed reference constellation which can be compared, in block 821 to a threshold value. If it is greater than the threshold value the process ultimately ends at block 823 in which the reverse perspective view can be computed based on the parameters that resulted in the intensity value 607 that exceeded the threshold. Otherwise, the process repeats from block 801.

According to an example, the above can be enhanced by using existing technology that guarantees some geometrical invariances in order to reduce the number of parameters to be found. For example, as described earlier, the Fourier-Mellin transformation can be used to provide invariances over translations, z-rotations, and scale. This means that the only transformation left are the x and y angle of the camera, bringing down the level of complexity of the solution.

In an example, the constellation feedback could be replaced by the square difference of proximity points between the reference constellation and the extracted one from the image.

Examples in the present disclosure can be provided as methods, systems or machine-readable instructions, such as any combination of software, hardware, firmware or the like. Such machine-readable instructions may be included on a computer readable storage medium (including but not limited to disc storage, CD-ROM, optical storage, etc.) having computer readable program codes therein or thereon.

The present disclosure is described with reference to flow charts and/or block diagrams of the method, devices and systems according to examples of the present disclosure. Although the flow diagrams described above show a specific order of execution, the order of execution may differ from that which is depicted. Blocks described in relation to one flow chart may be combined with those of another flow chart. In some examples, some blocks of the flow diagrams may not be necessary and/or additional blocks may be added. It shall be understood that each flow and/or block in the flow charts and/or block diagrams, as well as combinations of the flows and/or diagrams in the flow charts and/or block diagrams can be realized by machine readable instructions.

The machine-readable instructions may, for example, be executed by a machine such as a general-purpose computer, a platform comprising user equipment such as a smart device, e.g., a smart phone, a special purpose computer, an embedded processor or processors of other programmable data processing devices to realize the functions described in the description and diagrams. In particular, a processor or processing apparatus may execute the machine-readable instructions. Thus, modules of apparatus may be implemented by a processor executing machine readable instructions stored in a memory, or a processor operating in accordance with instructions embedded in logic circuitry. The term 'processor' is to be interpreted broadly to include a CPU, processing unit, ASIC, logic unit, or programmable gate set etc. The methods and modules may all be performed by a single processor or divided amongst several processors.

Such machine-readable instructions may also be stored in a computer readable storage that can guide the computer or other programmable data processing devices to operate in a specific mode. For example, the instructions may be provided on a non-transitory computer readable storage medium encoded with instructions, executable by a processor.

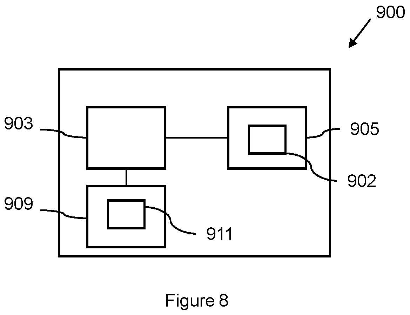

Figure 8 is a schematic representation of a machine according to an example. The machine 900 can be, e.g., a system or apparatus, user equipment, or part thereof. The machine 900 comprises a processor 903, and a memory 905 to store instructions 902, executable by the processor 903. The machine comprises a storage 909 that can be used to store data 901 representing images, constellations, parameters, scaling factors and so on as described above with reference to figures 1 to 8 for example.

The instructions 907 can cause the machine 900 to implement a method for correcting perspective distortion of a suspect image with respect to a reference pattern, wherein the reference pattern defines a reference constellation comprising a first set of points, wherein the first set of points represent a measure of correlation calculated from a normalised cross-correlation between a source digital watermark and a unit pattern, wherein the unit pattern defines a steganographic primitive of the source digital watermark, the instructions executable by the processor 903, whereby to cause the processor to generate an extracted constellation, wherein the extracted constellation comprises a second set of points representing a normalised measure of correlation calculated from a cross-correlation between the unit pattern and a representation of the source digital watermark extracted from the suspect image, wherein the representation of the source digital watermark extracted from the suspect image comprises a version of the source digital watermark degraded by one or more perspective transformations, generate a perspective-transformed constellation by perspective transforming the reference constellation on the basis of a set of parameters selected from a range for scale and rotation of a geometric transformation used for cross correlation between the extracted constellation and the reference pattern, wherein the range for scale and rotation is generated on the basis of the first set of points of the reference pattern, calculate a cross-correlation between the perspective-transformed constellation and the extracted constellation, wherein the cross-correlation between the perspective-transformed constellation and the extracted constellation comprises a measure of geometric distortion between the extracted constellation and the perspective transformed reference pattern, and determine a final set of parameters selected from the range based on the measure of geometric distortion, and compute a geometric transformation to correct perspective distortion of the suspect image.

Accordingly, the machine 900 can implement a method for correcting perspective distortion of a suspect image with respect to a reference pattern.

Such machine-readable instructions may also be loaded onto a computer or other programmable data processing devices, so that the computer or other programmable data processing devices perform a series of operations to produce computer-implemented processing, thus the instructions executed on the computer or other programmable devices provide an operation for realizing functions specified by flow(s) in the flow charts and/or block(s) in the block diagrams.

Further, the teachings herein may be implemented in the form of a computer or software product, such as a non-transitory machine-readable storage medium, the computer software or product being stored in a storage medium and comprising a plurality of instructions, e.g., machine readable instructions, for making a computer device implement the methods recited in the examples of the present disclosure.

In some examples, some methods can be performed in a cloud-computing or network-based environment. Cloud-computing environments may provide various services and applications via the Internet. These cloud-based services (e.g., software as a service, platform as a service, infrastructure as a service, etc.) may be accessible through a web browser or other remote interface of the user equipment for example. Various functions described herein may be provided through a remote desktop environment or any other cloud-based computing environment.

While various embodiments have been described and/or illustrated herein in the context of fully functional computing systems, one or more of these exemplary embodiments may be distributed as a program product in a variety of forms, regardless of the particular type of computer-readable-storage media used to actually carry out the distribution. The embodiments disclosed herein may also be implemented using software modules that perform certain tasks. These software modules may include script, batch, or other executable files that may be stored on a computer-readable storage medium or in a computing system. In some embodiments, these software modules may configure a computing system to perform one or more of the exemplary embodiments disclosed herein. In addition, one or more of the modules described herein may transform data, physical devices, and/or representations of physical devices from one form to another.

The preceding description has been provided to enable others skilled in the art to best utilize various aspects of the exemplary embodiments disclosed herein. This exemplary description is not intended to be exhaustive or to be limited to any precise form disclosed. Many modifications and variations are possible without departing from the spirit and scope of the instant disclosure. The embodiments disclosed herein should be considered in all respects illustrative and not restrictive. Reference should be made to the appended claims and their equivalents in determining the scope of the instant disclosure.

**Claims**

1. A method for correcting perspective distortion of a suspect image (107) with respect to a reference pattern (203), wherein the reference pattern (203) defines a reference constellation comprising a first set of points (209), wherein the first set of points (209) represent a measure of correlation calculated from a normalised cross-correlation between a source digital watermark (201) and a unit pattern (207), wherein the unit pattern (207) defines a steganographic primitive of the source digital watermark (201), the method comprising:

generating an extracted constellation (603), wherein the extracted constellation (603) comprises a second set of points representing a normalised measure of correlation calculated from a cross-correlation between the unit pattern (207) and the suspect image (107), wherein suspect image (107) comprises a version of the source digital watermark degraded by one or more perspective transformations;
generating a perspective-transformed constellation by perspective transforming the reference constellation (203) on the basis of a set of parameters selected from a range for scale and rotation of a geometric transformation used for cross correlation between the extracted constellation (603) and the reference pattern (203), wherein the range for scale and rotation is generated on the basis of the first set of points of the reference pattern (203);
calculating a cross-correlation between the perspective-transformed constellation and the extracted constellation (603), wherein the cross-correlation between the perspective-transformed constellation and the extracted constellation (603) comprises a measure of geometric distortion between the extracted constellation (603) and the perspective transformed reference pattern (203); and
determining a final set of parameters selected from the range based on the measure of geometric distortion; and
computing a geometric transformation to correct perspective distortion of the suspect image (107).

2. The method as claimed in claim 1, further comprising:

generating a set of candidate parameters representing an initial projection of the suspect image onto an image plane, wherein the candidate parameters comprise a set of coordinates defining a mapping for the suspect image onto the image plane; and
using the candidate parameters of the initial projection of the suspect image to determine the range for scale and rotation of a geometric transformation used for cross correlation between the extracted constellation and the perspective-transformed constellation.

3. The method as claimed in claim 2, further comprising:
defining an initial search space relating to a set of parameters for scale and rotation of a geometric transformation used for cross correlation between the extracted constellation and the perspective-transformed constellation on the basis of the set of candidate parameters representing the initial projection of the suspect image onto the image plane.

4. The method as claimed in any preceding claim, further comprising:

minimising a loss function relating to the measure of geometric distortion between the perspective transformed extracted constellation and the perspective-transformed constellation by calculating a gradient value; and on the basis of the gradient value, modifying a set of parameters for scale and rotation of a geometric transformation used for cross correlation between the extracted constellation and the perspective-transformed constellation.

5. The method as claimed in claim 4, wherein the loss function comprises the measure of geometric distortion between the perspective transformed extracted constellation and the perspective-transformed constellation.

6. The method as claimed in claim 5, wherein the measure of geometric distortion comprises a measure of intensity representing a degree of alignment between the perspective transformed extracted constellation and the perspective-transformed constellation.

7. The method as claimed in any of claims 4 to 6, wherein the modification is performed using stochastic gradient descent.

8. Apparatus (900) comprising:

at least one processor (903); and at least one memory (905) including computer program code (902) for correcting perspective distortion of a suspect image (107) with respect to a reference pattern (203), wherein the reference pattern (203) defines a reference constellation comprising a first set of points (209), wherein the first set of points (209) represent a measure of correlation calculated from a normalised cross-correlation between a source digital watermark (201) and a unit pattern (207), wherein the unit pattern (207) defines a steganographic primitive of the source digital watermark (201), the at least one memory and computer program code being configured to, with the at least one processor, cause the apparatus to:

generate an extracted constellation (603), wherein the extracted constellation (603) comprises a second set of points representing a normalised measure of correlation calculated from a cross-correlation between the unit pattern (207) and the suspect image (107), wherein suspect image (107) comprises a version of the source digital watermark degraded by one or more perspective transformations; generate a perspective-transformed constellation by perspective transforming the reference constellation (203) on the basis of a set of parameters selected from a range for scale and rotation of a geometric transformation used for cross correlation between the extracted constellation (603) and the reference pattern (203), wherein the range for scale and rotation is generated on the basis of the first set of points of the reference pattern (203);

calculate a cross-correlation between the perspective-transformed constellation and the extracted constellation (603), wherein the cross-correlation between the perspective-transformed constellation and the extracted constellation (603) comprises a measure of geometric distortion between the extracted constellation (603) and the perspective transformed reference pattern (203);

determine a final set of parameters selected from the range based on the measure of geometric distortion; and compute a geometric transformation to correct perspective distortion of the suspect image (107).

9. The apparatus of claim 9, wherein the at least one memory (905) and computer program code (902) are configured to, with the at least one processor, further cause the apparatus (900) to:

generate a set of candidate parameters representing an initial projection of the suspect image onto an image plane, wherein the candidate parameters comprise a set of coordinates defining a mapping for the suspect image onto the image plane; and using the candidate parameters of the initial projection of the suspect image, determine the range for scale and rotation of a geometric transformation used for cross correlation between the extracted constellation and the perspective-transformed constellation.

10. The apparatus of claim 8 or 9, wherein the at least one memory (905) and computer program code (902) are configured to, with the at least one processor, further cause the apparatus to:
define an initial search space relating to a set of parameters for scale and rotation of a geometric transformation used for cross correlation between the extracted constellation and the perspective-transformed constellation on the basis of the set of candidate parameters representing the initial projection of the suspect image onto the image plan.

11. The apparatus of any of claims 8 to 10, wherein the at least one memory (905) and computer program code (902) are configured to, with the at least one processor, further cause the apparatus to:
minimise a loss function relating to the measure of geometric distortion between the perspective transformed extracted constellation and the perspective-transformed constellation by calculating a gradient value; and
on the basis of the gradient value, modify a set of parameters for scale and rotation of a geometric transformation used for cross correlation between the extracted constellation and the perspective-transformed constellation.

12. The apparatus of claim 11, wherein the loss function comprises the measure of geometric distortion between the perspective transformed extracted constellation and the perspective-transformed constellation.

13. The apparatus of claim 12, wherein the measure of geometric distortion comprises a measure of intensity representing a degree of alignment between the perspective transformed extracted constellation and the perspective-transformed constellation.

14. The apparatus of any of claims 11 to 13, wherein the at least one memory and computer program code are configured to, with the at least one processor, further cause the apparatus to perform the modification using stochastic gradient descent.

15. A machine-readable storage medium encoded with instructions (902) for correcting perspective distortion of a suspect image with respect to a reference pattern (203), wherein the reference pattern defines a reference constellation (203) comprising a first set of points (209), wherein the first set of points (209) represent a measure of correlation calculated from a normalised cross-correlation between a source digital watermark (201) and a unit pattern (207), wherein the unit pattern defines a steganographic primitive of the source digital watermark, the instructions executable by a processor, whereby to cause the processor to:

generate an extracted constellation (603), wherein the extracted constellation (603) comprises a second set of points representing a normalised measure of correlation calculated from a cross-correlation between the unit pattern (207) and the suspect image (107), wherein suspect image (107) comprises a version of the source digital watermark degraded by one or more perspective transformations;
generate a perspective-transformed constellation by perspective transforming the reference constellation (203) on the basis of a set of parameters selected from a range for scale and rotation of a geometric transformation used for cross correlation between the extracted constellation (603) and the reference pattern (203), wherein the range for scale and rotation is generated on the basis of the first set of points of the reference pattern (203);

calculate a cross-correlation between the perspective-transformed constellation and the extracted constellation (603), wherein the cross-correlation between the perspective-transformed constellation and the extracted constellation (603) comprises a measure of geometric distortion between the extracted constellation (603) and the perspective transformed reference pattern (203);

determine a final set of parameters selected from the range based on the measure of geometric distortion; and
compute a geometric transformation to correct perspective distortion of the suspect image (107).

**Amended claims in accordance with Rule 137(2) EPC.**

1. A method for correcting perspective distortion of a suspect image (107) with respect to a reference pattern (203) performed by an apparatus, wherein the reference pattern (203) defines a reference constellation comprising a first set of points (209), wherein the first set of points (209) represent a measure of correlation calculated from a normalised cross-correlation between a source digital watermark (201) and a unit pattern (207), wherein the unit pattern (207) defines a steganographic primitive of the source digital watermark (201), the method comprising:

• generating an extracted constellation (603), wherein the extracted constellation (603) comprises a second set of points representing a normalised measure of correlation calculated from a cross-correlation between the unit pattern (207) and the suspect image (107), wherein suspect image (107) comprises a version of the source digital watermark degraded by one or more perspective transformations;
• generating a perspective-transformed constellation by perspectively transforming the reference constellation (203) on the basis of a set of parameters selected from a range for scale and rotation of a geometric transformation used for a cross-correlation between the extracted constellation (603) and the reference pattern (203), wherein the range for scale and rotation is generated on the basis of the first set of points of the reference pattern (203);

• calculating a cross-correlation between the perspective-transformed constellation and the extracted constellation (603), wherein the cross-correlation between the perspective-transformed constellation and the extracted constellation (603) comprises a measure of geometric distortion between the extracted constellation (603) and the perspective transformed reference pattern (203); and

• determining a final set of parameters selected from the range based on the measure of geometric distortion; and

• computing a geometric transformation based on the final set of parameters to correct perspective distortion of the suspect image (107).

2. The method as claimed in claim 1, further comprising:

o generating a set of candidate parameters representing an initial projection of the suspect image onto an image plane, wherein the candidate parameters comprise a set of coordinates defining a mapping for the suspect image onto the image plane; and

∘ using the candidate parameters of the initial projection of the suspect image to determine the range for scale and rotation of a geometric transformation used for the cross correlation between the extracted constellation and the perspective-transformed constellation.

3. The method as claimed in claim 2, further comprising:

o defining an initial search space relating to a set of parameters for scale and rotation of the geometric transformation used for the cross correlation between the extracted constellation and the perspective-transformed constellation on the basis of the set of candidate parameters representing the initial projection of the suspect image onto the image plane.

4. The method as claimed in claim 1, further comprising:

o minimizing a loss function relating to the measure of geometric distortion between the extracted constellation and the perspective-transformed constellation by calculating a gradient value; and

∘ on the basis of the gradient value, modifying a set of parameters for scale and rotation of a geometric transformation used for the cross correlation between the extracted constellation and the perspective-transformed constellation.

5. The method as claimed in claim 4, wherein the loss function comprises the measure of geometric distortion between the extracted constellation and the perspective-transformed constellation.

6. The method as claimed in claim 5, wherein the measure of geometric distortion comprises a measure of intensity representing a degree of alignment between the extracted constellation and the perspective-transformed constellation.

7. The method as claimed in any of claims 4 to 6, wherein the modification is performed using stochastic gradient descent.

8. An apparatus (900) configured to perform the method according to any of claims 1 to 7.

9. A machine-readable storage medium comprising instructions, wherein, when the instructions are executed by an apparatus, the apparatus is caused to perform the method according to any of claims 1 to 7.

Figure 1

201

203

209

207

205

207

207

Figure 2

Figure 3

(a)

Figure 4

(c)

(b)

(d)

Figure 4

Figure 5

107

603

605

Figure 6

Figure 7

Figure 8

EP 4 734 039 A1

Europäisches
Patentamt

European
Patent Office

Office européen
des brevets

# EUROPEAN SEARCH REPORT

**Application Number**

EP 24 20 8562

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2003/072468 A1 (BRUNK HUGH L [US] ET AL) 17 April 2003 (2003-04-17) <br> * abstract; figures 5, 6, 7, 8 * <br> * paragraphs [0004] - [0012] * <br> * paragraphs [0019] - [0020] * <br> * paragraphs [0026], [0003] * <br> * paragraphs [0047], [0081] * <br> ----- | 1-3, 8-10,15 | INV. <br> G06T1/00 <br> G06T5/80 |
| A | US 11 113 781 B2 (DIGIMARC CORP [US]) 7 September 2021 (2021-09-07) <br> * the whole document * <br> ----- | 1-15 | |
| A | US 7 369 678 B2 (DIGIMARC CORP [US]) 6 May 2008 (2008-05-06) <br> * the whole document * <br> ----- | 1-15 | |

**TECHNICAL FIELDS SEARCHED (IPC)**

G06T

The present search report has been drawn up for all claims

| Place of search | Date of completion of the search | Examiner |
|---|---|---|
| Munich | 26 March 2025 | Rodes Arnau, Isabel |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
.............................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 20 8562

This annex lists the patent family members relating to the patent documents cited in the above-mentioned European search report.
The members are as contained in the European Patent Office EDP file on
The European Patent Office is in no way liable for these particulars which are merely given for the purpose of information.

26-03-2025

| Patent document cited in search report | | Publication date | Patent family member(s) | | Publication date |
|---|---|---|---|---|---|
| US 2003072468 | A1 | 17-04-2003 | US | 2002106104 A1 | 08-08-2002 |
| | | | US | 2002172396 A1 | 21-11-2002 |
| | | | US | 2003072468 A1 | 17-04-2003 |
| | | | US | 2004250078 A1 | 09-12-2004 |
| | | | US | 2007154061 A1 | 05-07-2007 |
| | | | US | 2009285446 A1 | 19-11-2009 |
| | | | WO | 02078234 A1 | 03-10-2002 |
| US 11113781 | B2 | 07-09-2021 | US | 2018005343 A1 | 04-01-2018 |
| | | | US | 2020193553 A1 | 18-06-2020 |
| | | | US | 2022114693 A1 | 14-04-2022 |
| | | | WO | 2018006095 A2 | 04-01-2018 |
| US 7369678 | B2 | 06-05-2008 | AU | 2936201 A | 24-07-2001 |
| | | | US | 6614914 B1 | 02-09-2003 |
| | | | US | 2003053653 A1 | 20-03-2003 |
| | | | US | 2004264735 A1 | 30-12-2004 |
| | | | US | 2006233420 A1 | 19-10-2006 |
| | | | US | 2009136085 A1 | 28-05-2009 |
| | | | US | 2011007936 A1 | 13-01-2011 |
| | | | WO | 0152181 A1 | 19-07-2001 |

EPO FORM P0459

For more details about this annex : see Official Journal of the European Patent Office, No. 12/82